Europäisches Patentamt

European Patent Office

Office européen des brevets

(11) Publication number : **0 655 479 A2**

# (12) EUROPEAN PATENT APPLICATION

(21) Application number : 94402675.6

(22) Date of filing : 23.11.94

(51) Int. Cl.⁶ : **C08J 9/00,** C08J 9/14,
// C08L75:04

(30) Priority : 27.11.93 KR 2553293

(43) Date of publication of application :
31.05.95 Bulletin 95/22

(84) Designated Contracting States :
DE FR GB

(71) Applicant : GOLDSTAR CO. LTD.
20, Yoido-Dong
Yongdungpo-Ku
Seoul (KR)

(72) Inventor : **Park, Cheul Hong**
Samick Apt. 7-321,
578-1, Yeonsan 4-Dong
Dongrae-Ku, Busan (KR)
Inventor : **Kwon, Yong Chol**
14-5, Kaeumjung-Dong
Changwon, Kyungsangnam-Do (KR)

(74) Representative : **Fort, Jacques**
**CABINET PLASSERAUD**
**84, rue d'Amsterdam**
**F-75440 Paris Cedex 09 (FR)**

(54) Thermal insulation material foam.

(57)    There is disclosed a thermal insulation material foam comprising approximately 90 to approximately 100 parts by weight of polyol, approximately 1.3 to approximately 1.4 parts by weight of catalyst, approximately 2.0 parts by weight of silicon, approximately 2.0 parts by weight of water and approximately 30 to approximately 35 parts by weight of HCFC-141b, and approximately 122 % by weight of methanediisocyanate based on the total weight of the above other components, preventive of destructurizing the ozone layer and superior in adiabatic charateristics and compressive strength.

EP 0 655 479 A2

## BACKGROUND OF THE INVENTION

Field of the invention

The present invention relates, in general, to a thermal insulation material foam useful in a refrigerator, a container and a construction material and, more particularly, to a thermal insulation material foam which excludes a foaming agent of CFC-11, to prevent the destructurizing of the ozone layer.

Description of the Prior Art

Active research and study have recently been directed to new refrigerants which can be utilized in various fields, such as refrigerators and cooling machines without causing environmental problems, especially, destructure of the ozone layer of the stratosphere.

Thus far, there has extensively been used a freon gas (CFC-11) as a refrigerant. Intensive study and observation has revealed that the freon gas, however, is a main factor of destructurizing the ozone layer. According to the Montreal protocol internationally agreed in 1986, it is prescribed that the freon gas should be prohibited in production and use from 1996. Such protocol promotes active research directed to substitute for the freon gas or to obtaining desired effect without the freon gas.

A thermal insulating material foam usually consists of a polyol, a catalyst, silicon, a foaming agent, water and methanediisocyanate (MDI) and, as the foaming agent, there is conventionally used CFC-11.

Such a typical thermal insulation material foam for refrigerator as is composed of as mentioned above is an urethane foam. To solve the problems caused by CFC-11 used as a foaming agent, there was suggested a foam that was prepared with reduced amount, about 50 % of the conventional amount, of the freon gas (CFC-11) by increasing not only the amount of water with polyol resulting from amine and polyether but also the amount of carbon dioxide.

Although the prior art produces the thermal insulation material foam with significantly reduced amount of freon gas (CFC-11), there is still used CFC-11 as a foaming agent which destructurizes the ozone layer. Consequently, the prior art using CFC-11 cannot exclude the destructure of the ozone layer which may bring about an effect on a warm of the glove.

## SUMMARY OF THE INVENTION

Therefore, an object of the present invention is to overcome the above problems encountered in the prior arts and to provide a thermal insulation material foam without CFC-11, capable of basically preventing destruction of the ozone layer with CFC-11.

In accordance with the present invention, the above object of the present invention could be accomplished by a provision of a thermal insulation material foam employing HCFC-141b as a foaming agent.

## BRIEF DESCRIPTION OF THE INVENTION

The above object and other advantages of the present invention will become more apparent by describing in detail the preferred embodiment of the present invention with reference to the attached drawing in which:

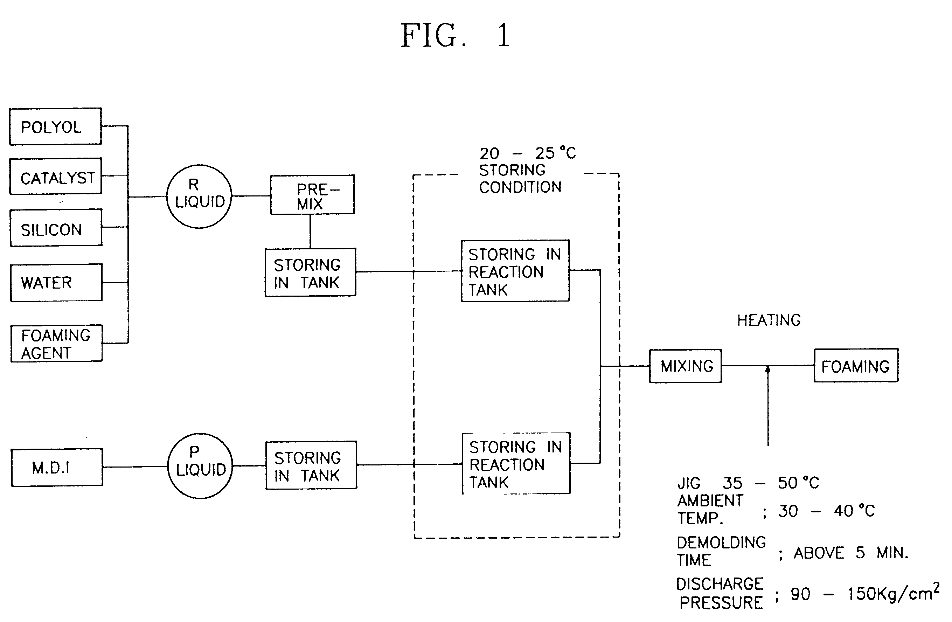

Fig. 1 is a block diagram showing a production procedure for a thermal insulation material foam according to the present invention.

## DETAILED DESCRIPTION OF THE INVENTION

In accordance with the present invention, a thermal insulation material foam consists of a polyol, a catalyst, silicon, HCFC-141b, water and methanediisocyanate (MDI).

With regard to amounts of the components, the polyol is contained in an amount of approximately 90 to approximately 100 parts by weight, the catalyst approximately 1.3 to approximately 1.4 parts by weight, the silicon approximately 2.0 parts by weight, HCFC-141b approximately 30 to approximately 35 parts by weight, and water approximately 2.0 parts by weight. Methanediisocyanate (MDI) is contained in an amount of approximately 112 % by weight based on the total weight of the other components.

Polyol is reacted with methanediisocyanate, to form a backbone of urethane foam which affects the strength and adiabatic characteristics of the resulting thermal insulation material foam.

When foaming, the catalyst plays a role in controlling reaction rate, affecting primary expansion rate and density.

In the thermal insulation material foam, the strength and the adiabatic characteristics thereof are also dependent on the silicon which has great influence upon the size of foam cell.

When forming urethane foam with the above components, the foaming agent takes charge of swelling the urethane foam.

As previously mentioned, methanediisocyanate (MDI) forms a backbone of the urethane foam, along with the polyol.

Now, a more detailed description will be made for the thermal insulation material foam in conjunction with preparation thereof.

Referring to Fig. 1, there is illustrated a preparation process for the thermal insulation material foam of the present invention. As shown in this drawing, raw materials are largely divided into two coarsely-processed types. That is, there are a polyol side in which a polyol is pre-mixed with silicon, a catalyst, a foaming agent and water, called "R liquid" from methanediisocyanate (MDI) containing isocyanate group, called "P liquid".

The polyol side and the methanediisocyanate (MDI) are independently stored in different storing tanks and transferred through lines into respective reaction tank. Preferably, they are stored at the reaction tanks at a temperature of 20 to 25°C.

Such two coarsely-processed material liquids are mixed by a foaming machine in a jig heated to a predetermined temperature and then, discharged into a necessary portion. At the moment, the ratio of R liquid to P liquid is preferably approximately 112% by weight.

Formation of urethane foam may be represented by the following chemical reaction formula:

$$\text{R-OH (polyol)} + \text{R'-NCO (MDI)} \longrightarrow \text{RNHCOOR'(Urethane)}$$

In the reaction, the polyol donates its activated hydrogens to isocyanate groups of methanediisocyanate and thus, they are reacted with each other, to produce urethane. When executing the reaction, it is preferred that the jig is heated to a temperature of 35 to 50°C and ambient temperature ranges from 30 to 40°C. Other reaction condition preferably has a demold time of not less than 5 minutes and a discharge pressure of 90 to 150 $kg/cm^2$.

The following table lists the quality standard of a thermal insulation material foam used in a refrigerator, a container or a construction material when pre-foaming.

|  | Material | |
| --- | --- | --- |
| Quality Standard | KP655 | KP700 |
| Reaction Rate (sec) | | |
| Cream Type | 10±1 | 10±3 |
| Gel Type | 50±6 | 52±3 |
| Tack Free Type | 72±8 | 72±8 |
| Density ($kg/m^2$) | 22±1 | 22.5±1 |

Preferably, the polyol useful to form the thermal insulation material foam comprises amine and sorbitol as main components, in combination of sucrose, ester and methanediisocyanate. By virtue of such polyol, the thermal insulation material foam can be improved in adiabatic characteristics and dimensional stability. As the polyol, a commercially available polyether, such as KP544 and KP700, may be employed and is added to the R liquid preferably in amounts ranging from approximately 90 to approximately 100°C.

Likewise, the silicon may be employed from commercially available silicon articles, such as L-6900, made by Union Carbide Co., F-373, made by ShinEtsu, B8467, SZ-1629 and the mixture thereof. To lower thermal conductivity, it is preferred to use silicon for fine cell and its amount is approximately 2.0 parts by weight.

In accordance with the present invention, HCFC-141b is employed as a foaming agent instead of CFC-11. Its amount is preferably in a range of approximately 30 to approximately 35 parts by weight and more preferably approximately 33 parts by weight. Rise in the injection amount of the foaming agent can be prevented by adjusting pre-foaming density into a range of 20 to 25.0 $kg/m^3$ with appropriate amount of water. Exclusion of CFC-11 according to the present invention brings about an effect of preventing the destruction of the ozone layer and the warmth of the glove.

Usual catalysts for the formation of thermal insulation material foam may be used in the present invention. Herein, KA0050 (PMHDAE) and KA014 (HHHTA), both made by KAO LISER Co. Ltd., are used. KA050 and KA014 are added in an amount of 0.8 to 0.9 part by weight and 0.5 part by weight, respectively. Particularly, in order to improve poor expansion molding resulting from dissolution of foam by the HCFC-141b or to prevent drop of discharge pressure upon foaming, a blend of gelling catalyst and blowing catalyst may be employed along with trimerization catalyst or cure-reduction catalyst functioning similarly.

In accordance with the present invention, crude methanediisocyanate (MDI) is employed, so as to improve a phenomenon of bad smelling upon foaming as well as storing stability of methanediisocyanate (MDI) itself.

The preferred embodiments of the present invention will now be further described with reference to specific examples.

EXAMPLE 1

Preparation of Thermal Insulation Material Foam

100 parts by weight of KP700 or KP644, commercially available polyether, 2.0 parts by weight of L6900, commercially available silicone, 0.8 part by weight of PMDEA and 0.5 part by weight of HHTA, commercially available catalysts for thermal insulation material foam, and 2.0 parts by weight were charged in a raw material tank and well mixed at 500 rpm. Using a pump, the mixture was transferred into a pre-mix tank which was then sealed. Thereafter, 33 parts by weight of HCFC-141b was added in the pre-mix tank and stirred at 1.000 rpm for 1 hour or more, to give an R liquid. The prepared R liquid was mixed with methanediisocyanate (MDI) in a weight ratio of 100:112. The resulting reactant liquid was well mixed by a foaming machine in a jig under the condition given in the following Table 1 and then discharged to prepare a foam.

The foam prepared in such pre-foaming manner was tested for density, and the result is given as shown in the following Table 1. As apparent from the data, the foam according to the present invention has a density useful for thermal insulation material foam.

Table 1

| Condition | Material | |
|---|---|---|
| | KP655 | KP700 |
| Temperature of R/P (°C) | 20±1 | 23±1 |
| Stirring Rate (rpm) | 3000-3600 | 3000-3600 |
| Stirring Time (sec.) | 5 | 5 |
| Mixer Kind | pin type homomixer | pin type homomixer |
| Density (kg/m$^2$) | 22±1 | 22.5±1 |

EXAMPLE 2

Measurement for Physical Properties of Foam

From the foam prepared, portions 1, 3, 5, 7, 9 and 11 were taken as shown in the following illustration and samples with a size of 40mm x 40mm x 40mm were made in a foaming horizontal direction.

| | | 90 | 145 |
|---|---|---|---|
| | | ← → | ← → |

| 11 | 10 | 9 | 8 | 7 | 6 | 5 | 4 | 3 | 2 | 1 |
|---|---|---|---|---|---|---|---|---|---|---|

At the moment, the samples were cut at both surfaces in a thickness of 5 mm per surface. The resulting samples were weighed on an electric balance and surface areas of pressing faces were calculated. Thereafter, the samples were compressed to a volume reduced to a degree of 10% or more by autograph. The autograph was carried out under the condition that cross head speed was 5 mm/min, chart speed 100 mm/min and full scale 100 kg.

The following Table 2 gives a few physical properties of present thermal insulation material foam for refrigerator and of conventional one.

Table 2

| Comparison of Physical Properties of Thermal Insulation Material | | |
|---|---|---|
| Thermal Insulation Material Foam | | |
| Property | Conventional | Present |
| K-factor (Kcal/m°Chr) | 0.0149 | 0.0145 |
| Compressive Strength (kg/cm²) | 1.3 | 1.5 |

In the Table 2, as K-factor has a lower value, and adiabatic characteristic is better, while, as compressive strength is larger, shape distortion is more restrained. Accordingly, it is apparent that the thermal insulation material foam according to the present invention has a combination of better adiabatic characteristics and restraint effect of shape distortion than the conventional thermal insulation material foam.

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

**Claims**

1. A thermal insulation material foam, comprising a polyol, a catalyst for the preparation of thermal insulation material foam, silicon, water, HCFC-141b and methanediisocyanate.

2. A thermal insulation material foam in accordance with Claim 1, wherein approximately 90 to approximately 100 parts by weight of the polyol, approximately 1.3 to approximately 1.4 parts by weight of the catalyst, approximately 2.0 parts by weight of the silicon, approximately 2.0 parts by weight of water and approximately 30 to approximately 35 parts by weight of HCFC-141b are contained, and the methanediisocyanate is contained in an amount of approximately 122 % by weight based on the total weight of the above other components.

3. A thermal insulation material foam in accordance with Claim 1, wherein the polyol consists of sorbitol and toluene diamine.

4. A thermal insulation material foam in accordance with Claim 1, wherein the catalyst is a mixture of KA050 and KA014.

5. A thermal insulation material foam in accordance with Claim 1, wherein the silicon is selected from a group consisting of L-6900, F-373, B-8462, SZ-1629 and the mixture thereof.

6. A thermal insulation material foam in accordance with Claim 5, wherein the silicon is one for fine cell.

7. A thermal insulation material foam in accordance with Claim 1, wherein the methanediisocyanate is a crude one.

FIG. 1